# EUROPEAN PATENT SPECIFICATION

(11) **EP 2 065 250 B1**
(45) Date of publication and mention of the grant of the patent: **31.10.2018**
(21) Application number: 08170024.7
(22) Date of filing: 26.11.2008
(51) Int. Cl.: B60N 2/30

(54) **A compact stowable seat**
Kompakt verstaubarer Sitz
Siège escamotable

(30) Priority: 27.11.2007 GB 0723202
(43) Date of publication of application: 03.06.2009
(73) Proprietor: Ford Global Technologies, LLC, Dearborn, MI 48126 (US)
(72) Inventor: Gerhardt, Torsten, London, N22 7UL (GB)
(74) Representative: Dörfler, Thomas

(56) References cited:
- FR-A1- 2 663 270
- FR-A1- 2 876 637
- GB-A- 2 384 464
- US-A- 4 133 573

## Description

This invention relates to seats for motor vehicles and in particular to a stowable seat for use in a van having a moveable bulkhead.

It is desirable for a light commercial vehicle such as a van to have maximum flexibility and a dual-usage van incorporating both a crew cab and a full load-length cargo area satisfies this need.

Such a dual-usage vehicle can be used to transport workers to say a building site in the morning, be used to transport large goods during the working day and then be used to take the workers back home in the evening or as a multi-use vehicle that can operate as family transport or as a business van for owner operators.

In order to meet the demands of this role the vehicle must be able to be easily converted between a single and a double cab van without requiring parts to be removed from the vehicle while meeting safety requirements such as the need for a full bulkhead in both configurations.

A moveable bulkhead with collapsible seats is known from, for example, GB-A-2,384, 464, or FR-A-2663 270. These arrangements provide a full uncompromised seating position in one condition and a tightly packaged stowed condition but has the disadvantage that the seats are mounted to the bulkhead. The mounting of the seats to the bulkhead is disadvantageous because it requires a more significant structure to be used for the bulkhead resulting in increased vehicle weight and places unique and expensive requirements on the bulkhead mechanism and latches in order to meet safety standards and in particular seat belt standards.

It is an object of this invention to provide a stowable seat for a motor vehicle that is floor mounted and occupies the minimum space when stowed.

According to a first aspect of the invention there is provided a motor vehicle seat for a motor vehicle having a moveable bulkhead, the seat comprising a seat back and a seat squab having front and rear ends and a pair of support mechanisms connecting the seat back and the seat squab to a floor of the motor vehicle, the seat being moveable from an 'in-use' position in which the seat squab is arranged substantially horizontally and the backrest extends upwardly from the rear end of the seat squab to a stowed position in which the seat squab and the backrest are arranged substantially vertically one upon the other with the backrest extending substantially vertically upwards from the rear end of the stowed squab, the pair of support mechanisms interlinking the backrest and the seat squab such that movement between the in-use and stowed positions of the seat is affected by simply moving the backrest forward or rearward between its 'in-use' and stowed positions wherein, each of the support mechanisms comprises of first, second, third and fourth arms which are interlinked so as to interconnect the backrest and the seat squab, connect the seat to the floor of the motor vehicle and control the movement of the seat during transit between the in-use and stowed positions, when the seat is in its stowed position, no part of the pair of support mechanisms lies to the rear of a vertical plane positioned adjacent to a rear face of the stowed backrest and, when the bulkhead is in a forward position, a front face of the moveable bulkhead is aligned with the vertical plane.

Front floor fixings of the pair of support mechanisms may be formed as pivot mechanisms fastened to the floor of the vehicle and the front floor fixings of the pair of support mechanisms may lie forwards of the vertical plane so that the seat can be transformed from its 'in-use' position to its stowed position by motion about its front floor fixings.

The pair of support mechanisms may include at least one latch to hold the seat in its 'in-use' position and moving the seat from its 'in-use' position to its stowed position further comprises releasing the at least one latch before moving the backrest forward to its stowed position.

There may be one support mechanism located on each side of the seat, each of which may comprise the first arm fixed at one end to the backrest, releasably attached at an opposite end to the floor of the motor vehicle by a latch and pivotally connected to the seat squab so as to support the rear end of the seat squab, the second arm pivotally connected at one end to the backrest and pivotally connected at an opposite end to the floor of the motor vehicle, the third arm pivotally connected at one end to the backrest and pivotally connected at an opposite end to the floor of the motor vehicle and the fourth arm pivotally connected at one end to the seat squab and pivotally connected at an opposite end to the third arm so as to support the front end of the seat squab, the second and third arms may form in combination with the backrest and the floor of the motor vehicle a four bar linkage.

The seat squab, the fourth arm, the portion of the third arm in between the pivotal connection to the fourth arm and the pivotal connection to the first arm and the portion of the first arm in between the pivotal connection of the third arm to the first arm and the pivotal connection to the rear end of the seat squab may form a second four bar linkage which controls the movement of the seat squab in relation to the backrest during the transformation of the seat.

The first arm may be used to pivotally connect the second and third arms to the backrest.

The first arm may be pivotally connected to the seat squab so as to support the rear end of the seat squab by a pivot joint and the second arm is pivotally connected to the first arm by the same pivot joint.

The second and third arms may be pivotally connected to a support frame of the backrest and the first arm may be fixed to the support frame.

According to a second aspect of the invention there is provided a motor vehicle having a moveable bulkhead to vary the load carrying capacity of the motor vehicle wherein the motor vehicle includes at least one motor vehicle seat constructed in accordance with said first aspect of the invention.

The motor vehicle may have two or more motor vehicle seats constructed in accordance with said first aspect of the invention arranged as a second row of seats.

The second row of seats may comprise of one seat having a capacity to support one passenger and one seat having a capacity to support two passengers.

The invention will now be described by way of example with reference to the accompanying drawing of which:-
Fig.1 is a schematic side view of an interior of a motor vehicle showing an available stowage space for a second row seat when a moveable bulkhead is moved to a forward position;
Fig.2 is a schematic side view of the interior of the motor vehicle showing the available space for the second row seat when a movable bulkhead is moved to a rear position;
Fig.3a is a schematic side view of the interior of the motor vehicle showing a second row seat constructed in accordance with the invention showing the seat in an 'in-use' position;
Fig.3b is a schematic side view similar to that shown in Fig.3a but showing a modification to the second row seat;
Fig.4 is a schematic side view of the interior of the motor vehicle showing the second row seat in a partially stowed position;
Fig.5 is a schematic side view of the interior of the motor vehicle showing the second row seat in a stowed position with the bulkhead in a rear position;
Fig.6 is a schematic side view similar to Fig.5 showing the second row seat in a stowed position with the bulkhead in a forward position;
Fig.7 is a schematic side view similar to Fig.3a but showing a second embodiment of a second row seat according to the invention.
Fig.8 is a pictorial view of a second row seat according to a preferred embodiment;
Fig.9 is a schematic side view of the interior of the motor vehicle showing the second row seat shown in Fig.8 in an 'in-use' position;
Fig.10 is a schematic side view of the interior of the motor vehicle showing the second row seat shown in Figs 8 and 9 in a partially stowed position;
Fig.11 is a schematic side view of the interior of the motor vehicle showing the second row seat of Figs. 8 to 10 in a stowed position with a bulkhead in a rear position; and
Fig.12 is a pictorial view on an enlarged scale of a mounting for the seat shown in Figs.8 to 11.

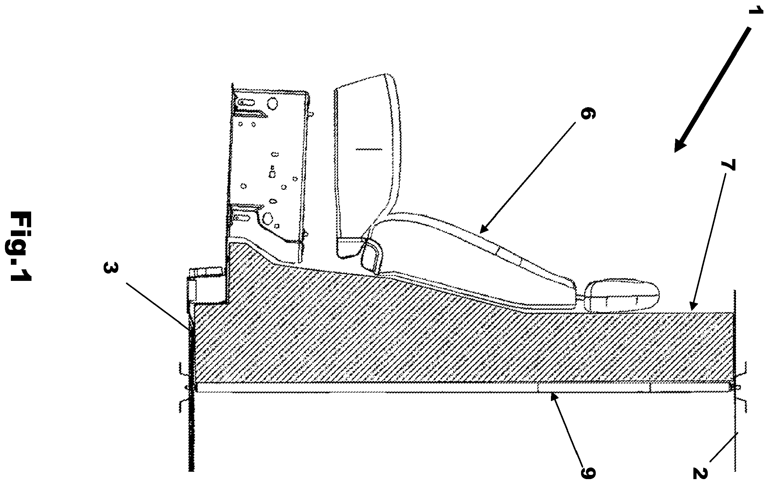

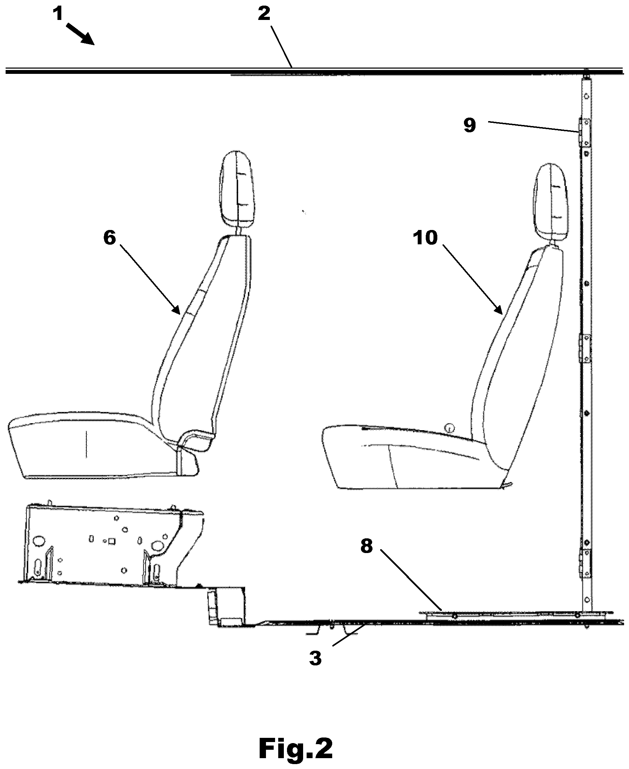

With particular reference to Figs.1 and 2 there is shown a motor vehicle in the form of a van 1 having a roof structure 2, a floor structure 3 and a moveable bulkhead 9. A front seat 6 is supported by the floor 3 and forms part of a front row of seats.

The moveable bulkhead 9 is moveable between a forward position shown in Fig.1 and a rear position as shown in Fig.2.

When the bulkhead 9 is in its forward position, the van 1 has maximum cargo carrying capacity to the rear of the bulkhead 9 and minimum passenger carrying capacity comprising only the seats such as seat 6 forming the front row of seats. There is a limited volume indicated by the hatched area 7 in which a second row of seats could be stowed. This volume is defined by the forward position of the bulkhead 9 and a rear face of each of the seats 6 in the front row of seats. The forward position of the bulkhead 9 will be determined upon a number of factors including the position of any side doors, the location of structural members and the need to maximise cargo capacity.

When the bulkhead 9 is in its rear position the van 1 has minimum cargo carrying capacity to the rear of the bulkhead 9 but maximum passenger carrying capacity enabling a second row of seats including a seat 10 to be provided.

The seat 10 must be a stowable seat capable of being stowed within the hatched area 7 when the bulkhead 9 is moved to its forward position but offering suitable accommodation for at least one passenger when in its 'in-use' position.

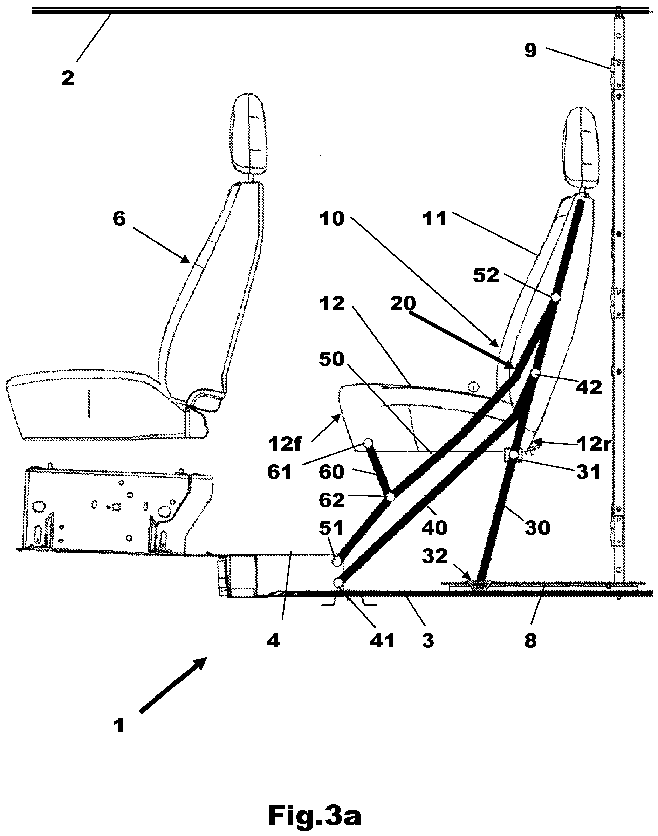

With reference to Fig.3a there is shown a first embodiment of a motor vehicle seat 10 according to this invention capable of meeting these needs. Fig.3a shows the seat 10 in an 'in-use' position.

The motor vehicle 1 is as described above having a roof structure 2, a floor structure 3 and a moveable bulkhead 9.

The seat 10 comprises a seat back 11 and a seat squab 12 having a front end 12f and a rear end 12r and a pair of support mechanisms 20, of which only one is shown, connecting the seat back 11 and the seat squab 12 to the floor 3 of the motor vehicle 1.

There is one support mechanism 20 located on each side of the seat 10, each of the support mechanisms 20 comprises of first, second, third and fourth arms 30, 40, 50 and 60 which are interlinked so as to interconnect the backrest 11 and the seat squab 12 and connect the seat 10 to the floor 3 of the motor vehicle 1.

The first arm 30 is fixed at one end to the backrest 11 and releasably attached at an opposite end to the floor 3 of the motor vehicle 1 by a latch 32. In this case the latch 32 is arranged to cooperate with a latch plate 8 so as to secure the seat 10 in the 'in-use' position. However, it will be appreciated that the latch plate could alternatively be formed as part of the floor 3 of the motor vehicle 1.

The first arm 30 is also pivotally connected at an intermediate position by a pivot joint 31 to the seat squab 12 near to the rear end 12r of the seat squab 12 so as to support the rear end 12r of the seat squab 12.

The second arm 40 is pivotally connected at one end by a pivot joint 42 to the backrest 11 and is pivotally connected by a pivot joint 41 at an opposite end to the floor 3 of the motor vehicle 1 or more precisely to a bracket 4 forming part of the floor structure 3. The connection of the second arm 40 to the backrest 11 is in this case affected by means of the first arm 30 to which it is pivotally connected by the pivot joint 42.

The third arm 50 is pivotally connected at one end by a pivot joint 52 to the backrest 11 and is pivotally connected by a pivot joint 51 at an opposite end to the bracket 4 forming part of the floor structure 3 of the motor vehicle. The connection of the third arm 50 to the backrest 11 is in this case affected by means of the first arm 30 to which it is pivotally connected by the pivot joint 52.

The fourth arm 60 is pivotally connected by a pivot joint 61 at one end to the seat squab 12 near to the front end 12f of the seat squab 12 and is pivotally connected by a pivot joint 62 at an opposite end to the third arm 50 so as to support and control the movement of the front end 12f of the seat squab 12.

The second and third arms 40 and 50 form in combination with the backrest 11 and the floor 3 of the motor vehicle 1 a four bar linkage which supports and controls the movement of the seat 10 during transit between the 'in-use' and stowed positions.

The seat squab 12, the fourth arm 60, the portion of the third arm 50 in between the pivots 62 and 52 and the portion of the first arm 30 in between pivots 52 and 31 form a second four bar linkage which controls the movement of the squab 12 in relation to the backrest 11 during the transformation of the seat 10. The second four bar linkage is actuated or controlled by the difference in angular movement between the first arm 30 and third arm 50 of the first four bar linkage.

When the seat 10 is in the 'in-use' position, the seat squab 12 is arranged substantially horizontally and the backrest 11 extends upwardly from the rear end 12r of the seat squab 12 as shown in Fig.3a.

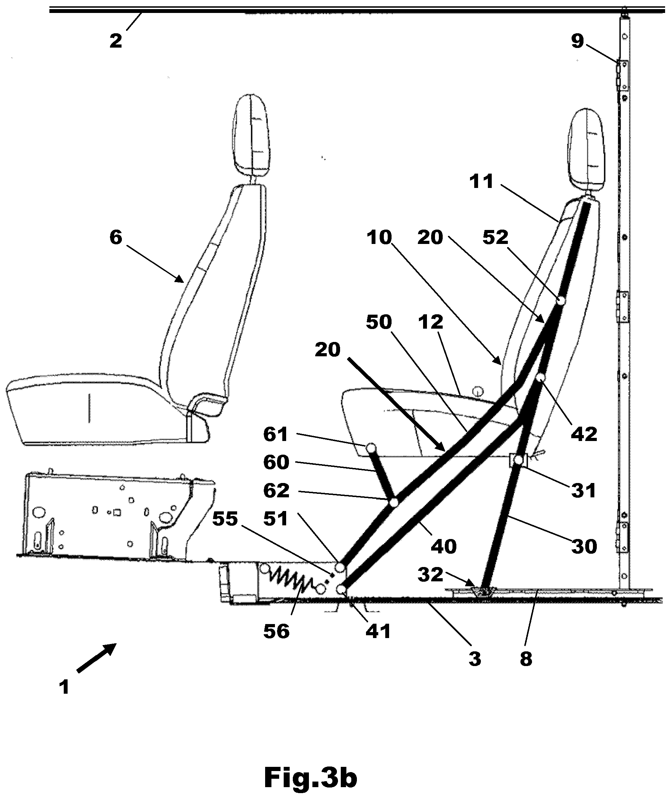

Fig.3b shows a second embodiment of a motor vehicle seat 10 which differs from that shown in Fig.3a only in that an assist spring 56 is attached to an extension 55 of the third arm 50 to bias the seat 10 towards the stowed position. That is to say, when the latch 32 is released, the spring 56 will assist with the stowing of the seat 10.

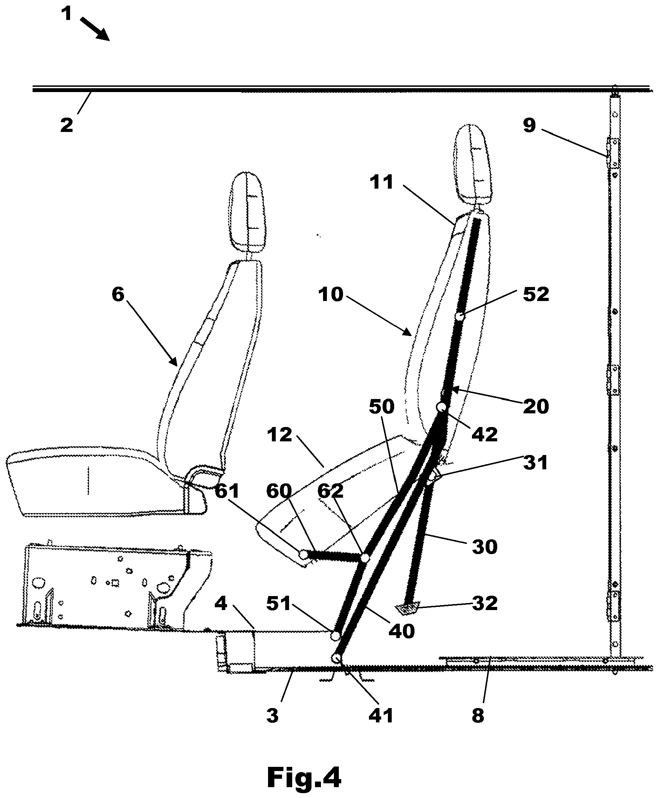

Moving on to Fig.4, the seat 10 is shown in a partially stowed position in which the latch 32 has been released and the backrest 11 has been moved in a forward direction. This movement has not only caused the backrest 11 to move forwards but also move upwards and rotate forwards due to the constraint imposed by the second and third arms 40 and 50. The forward motion of the backrest 11 also causes the seat squab 12 to rotate downwardly due to the reduction of the angle between arms 30 and 50 causing the squab pivot 31 to move forwardly with respect to the third arm 50 forcing the squab pivot 61 to move forwards correspondingly which results in a counter-clockwise rotation of the fourth arm 60 due to the connection of the fourth arm 60 to the third arm 50.

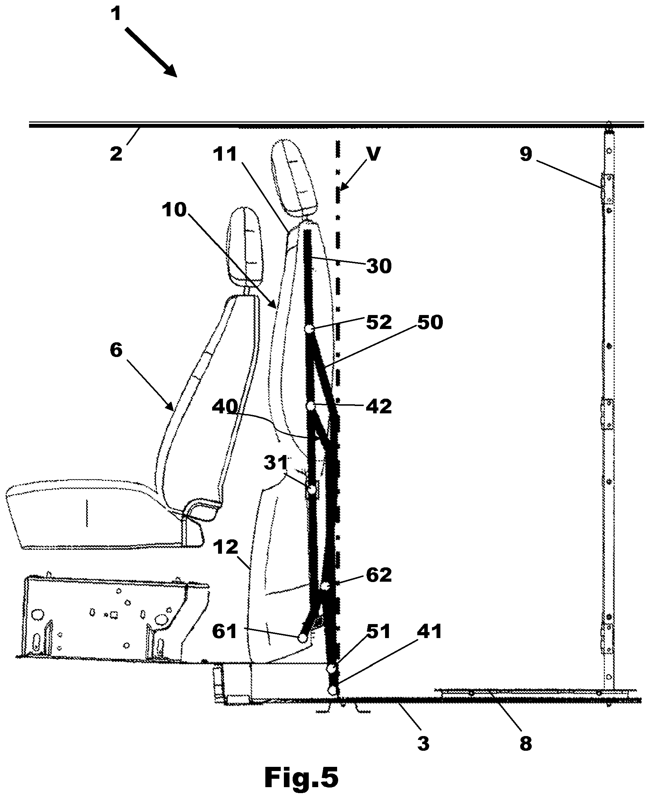

Fig.5 shows the seat 10 in the stowed position prior to the bulkhead 9 being moved forward.

In the stowed position the seat squab 12 and the backrest 11 are arranged substantially vertically one upon the other with the backrest 11 extending substantially vertically upwards from the rear end 12r of the stowed squab 12. This arrangement is the optimum package for the stowed seat 10 in that it maximises the available cargo area behind the stowed seat 10.

When the seat 10 is in its stowed position, no part of the pair of support mechanisms 20 lies to the rear of a vertical plane "V" positioned adjacent to a rear face of the stowed backrest 11. The vertical plane "V" may be positioned so as to touch the rear face of the backrest 11 or may be positioned a few millimetres to the rear of the rear face of the backrest 11.

One significant advantage of this invention is that the joints 51 and 41 are always positioned forwards of the plane "V" so that they are always forwards of any bulkhead position, that is to say, never in the cargo area.

The seat 10 therefore does not need to be fully de-latched, lifted and manually moved forwards out of the cargo area as would be the case if front seat fixings, used instead of the pivots 51 and 41 were formed conventionally as latches fixed to latch plates positioned rearwards of the plane "V".

It will be appreciated that these latch plates could also be positioned forwards of the plane "V" similar to joints 51 and 41, thereby not adding the requirement to fully de-latch, lift and manually move the seat 10, but if this were the case then any latches attached to the seat arms 40 and 50 would not need to provide a de-latch function but instead would need to be able to rotate in the latch plates, thereby effectively turning the latched connection into a hinged connection, which is the reason why joints 51 and 41 are formed as hinges in this invention.

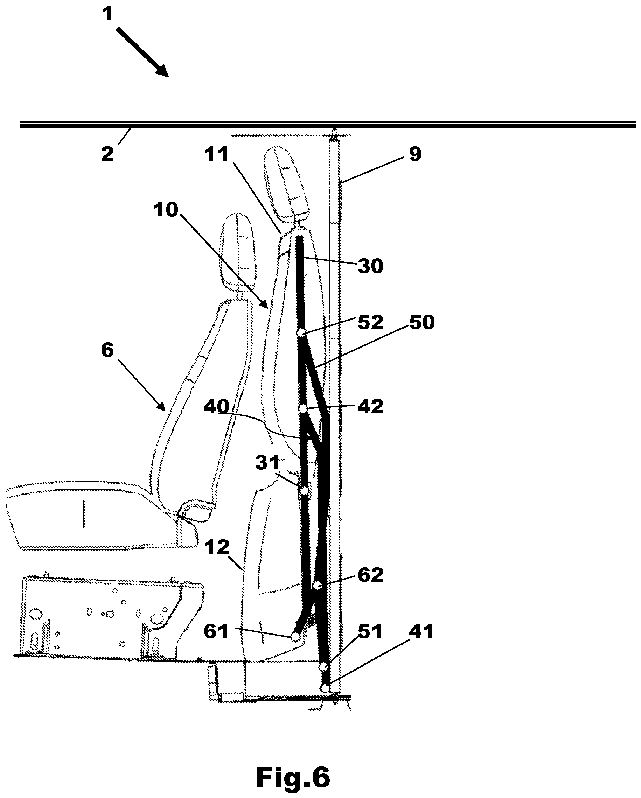

Fig.6 is identical to Fig.5 with the exception that the bulkhead 9 is shown in its forward position.

When the bulkhead 9 is in its forward position, a front face of the moveable bulkhead 9 is aligned with the vertical plane "V" and so it may be desirable for the vertical plane "V" to be slightly to the rear of the rear face of the backrest 11 so that rattling of the backrest 11 against the bulkhead 9 is avoided.

Operation of the seat 10 is as follows.

From the 'in-use' position as shown in Figs.3a and 3b, the first step is to release the latch 32 holding the seat 10 in the 'in-use' position, this is affected by operating a handle or lever (not shown) attached to an upper portion of the backrest 11 and connected to the latch 32 by a cable (not shown). After the latch 32 has been released the backrest 11 is merely pulled forward using the handle to the stowed position. Because the support mechanisms 20 interlink the backrest 11 and the seat squab 12 no separate operation of the seat squab 12 is required. After the seat 10 has been stowed the bulkhead 9 can be moved to its forward position as shown in Fig.6.

To return the seat 10 from the stowed position to the 'in-use' position, the bulkhead 9 is first moved to its rear position and then the backrest 11 is merely pushed or pulled rearwardly until the latch 32 is re-engaged.

One significant advantage of the invention is that movement of the seat 10 between the in-use and stowed positions is affected by simply moving the backrest 11 forward or rearward between its 'in-use' and stowed positions.

It will be appreciated that the seat 10 can be designed to have the capacity to accommodate a single passenger or could be designed to have the capacity to accommodate more than one passenger.

It will also be appreciated that the motor vehicle may have two or more seats 10 arranged as a second row of seats.

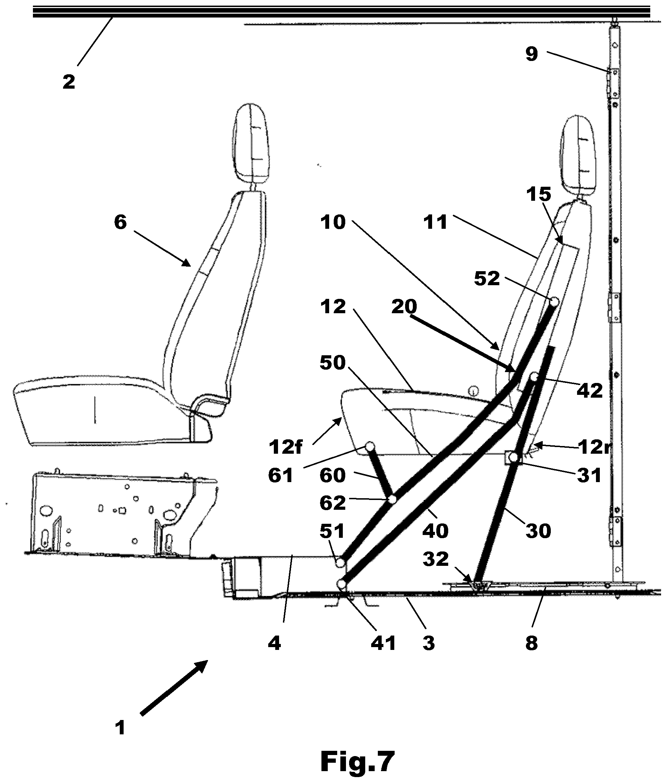

Referring now to Fig.7 there is shown a motor vehicle seat 10 which in most respects is identical to the seat previously described and which functions in an identical manner.

The only significant difference between the seat 10 shown in Fig.7 and the seat shown in Fig.3a is that in the embodiment shown in Fig.7 the second and third arms 40 and 50 are pivotally connected to a support frame 15 of the backrest 11 and the first arm 30 is fixed to the support frame 15 whereas, in the embodiment shown in Fig.3a, the second and third arms 40 and 50 are pivotally connected to the first arm 30 and the first arm 30 forms part of a support frame for the backrest 11.

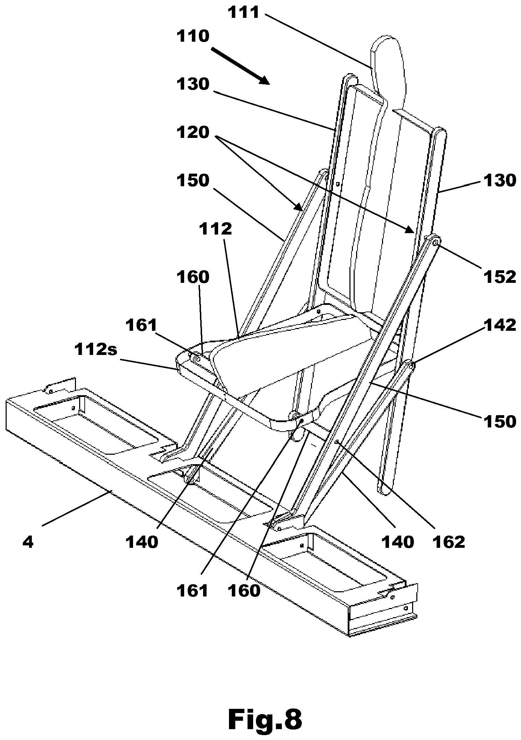

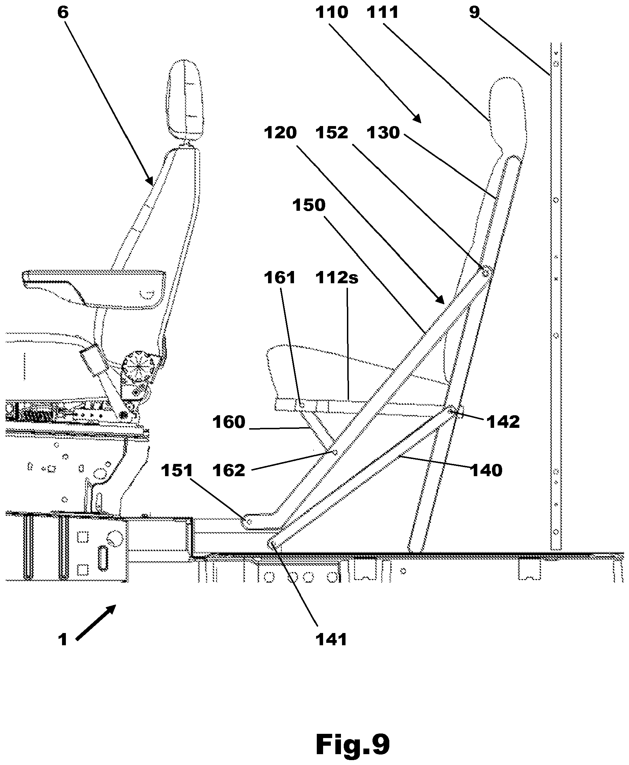

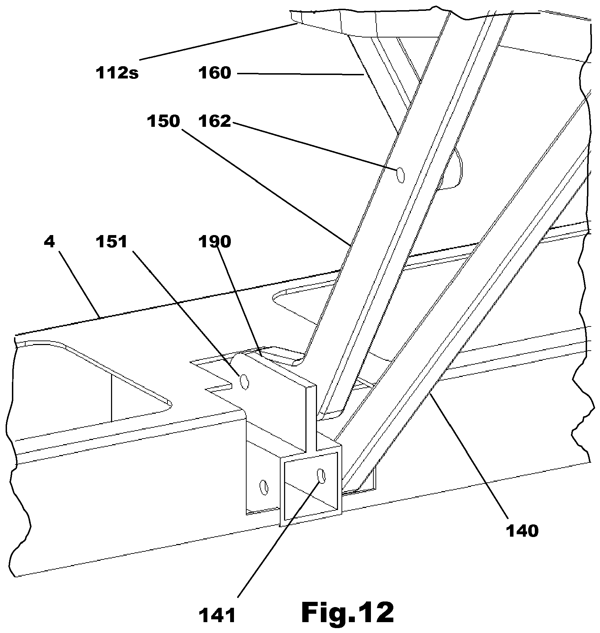

With reference to Figs.8 to 12 there is shown a preferred embodiment of a motor vehicle seat 110 according to the invention capable of meeting these needs. Fig.9 shows the seat 110 in an 'in-use' position.

The motor vehicle 1 is as described above having a roof structure, a floor structure and a moveable bulkhead 9.

The seat 110 comprises a seat back 111 and a seat squab 112 having a front end and a rear end and a pair of support mechanisms 120 connecting the seat back 111 and the seat squab 112 to the floor of the motor vehicle 1.

There is one support mechanism 120 located on each side of the seat 110, each of the support mechanisms 120 comprises of first, second, third and fourth arms 130, 140, 150 and 160 which are interlinked so as to interconnect the backrest 111 and the seat squab 112 and connect the seat 110 to the floor of the motor vehicle 1.

The first arm 130 is fixed at one end to the backrest 111 and releasably attached at an opposite end to the floor of the motor vehicle 1 by a latch (not shown).

The first arm 130 is also pivotally connected at an intermediate position by a pivot joint 142 to the seat squab 112 near to the rear end of the seat squab 112 so as to support the rear end of the seat squab 112.

The second arm 140 is pivotally connected at one end by the pivot joint 142 to the backrest 111 and is pivotally connected by a pivot joint 141 at an opposite end to the floor of the motor vehicle 1 or more precisely to a support structure 4 forming part of the floor structure by means of a bracket 190. The connection of the second arm 140 to the backrest 111 is in this case affected by means of the first arm 130 to which it is pivotally connected by the pivot joint 142. The connection of the first arm 130 to the seat squab 112 and the connection of the second arm 140 to the first arm 130 are therefore coincident both being made by means of the same pivot joint 142.

The third arm 150 is pivotally connected at one end by a pivot joint 152 to the backrest 111 and is pivotally connected by a pivot joint 151 at an opposite end to the bracket 190 to the support structure 4 which forms part of the floor structure of the motor vehicle. The connection of the third arm 150 to the backrest 111 is in this case affected by means of the first arm 130 to which it is pivotally connected by the pivot joint 152.

The fourth arm 160 is pivotally connected by a pivot joint 161 at one end to a frame 112s of the seat squab 112 near to the front end of the seat squab 112 and is pivotally connected by a pivot joint 162 at an opposite end to the third arm 150 so as to support and control the movement of the front end of the seat squab 112.

The second and third arms 140 and 150 form in combination with the backrest 111 and the floor of the motor vehicle 1 a four bar linkage which supports and controls the movement of the seat 110 during transit between the 'in-use' and stowed positions.

The frame of the seat squab 112s, the fourth arm 160, the portion of the third arm 140 in between the pivotal connection 162 to the fourth arm 160 and the pivotal connection 152 to the first arm 130 and the portion of the first arm 130 in between the pivotal connection 152 of the third arm 150 to the first arm 130 and the pivotal connection 142 to the rear end of the seat squab 112 form a second four bar linkage which controls the movement of the seat squab 112 in relation to the backrest 111 during the transformation of the seat. The second four bar linkage is actuated or controlled by the difference in angular movement between the first arm 130 and third arm 150 of the first four bar linkage.

When the seat 110 is in the 'in-use' position, the seat squab 112 is arranged substantially horizontally and the backrest 111 extends upwardly from the rear end 12r of the seat squab 12 as shown in Fig.8.

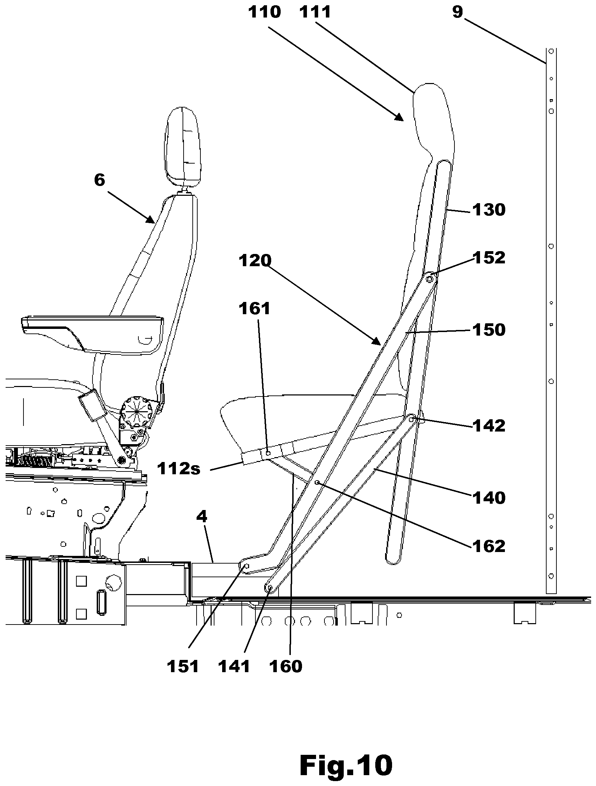

In Fig.10, the seat 110 is shown in a partially stowed position in which the latch used to hold the seat 110 in the in-use position has been released and the backrest 111 has been moved in a forward direction. This movement has not only caused the backrest 111 to move forwards but also move upwards and rotate forwards due to the constraint imposed by the second and third arms 140 and 150. The forward motion of the backrest 111 also causes the seat squab 112 to rotate downwardly due to the connection of the fourth arm 160 to the third arm 150.

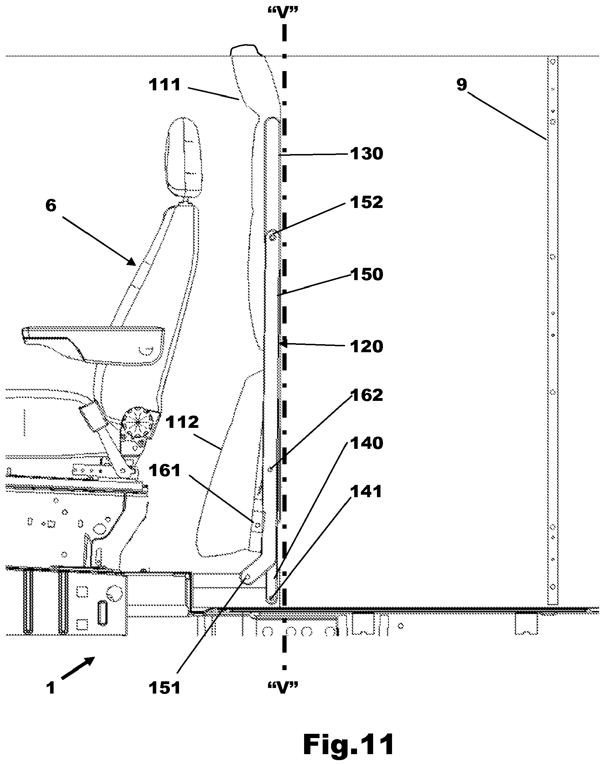

Fig.11 shows the seat 110 in the stowed position prior to the bulkhead 9 being moved forward.

In the stowed position the seat squab 112 and the backrest 111 are arranged substantially vertically one upon the other with the backrest 111 extending substantially vertically upwards from the rear end of the stowed squab 112.

When the seat 110 is in its stowed position, no part of the pair of support mechanisms 120 lies to the rear of a vertical plane "V" positioned adjacent to a rear face of the stowed backrest 111. The vertical plane "V" may be positioned so as to touch the rear face of the backrest 111 or may be positioned a few millimetres to the rear of the rear face of the backrest 111.

The front floor fixings of the pair of support mechanisms 120 are formed by the pivotal connections 141,151 which are fastened to the floor of the vehicle by the bracket 190.

The front floor fixings in the form of the pivotal connections 141, 151 of the pair of support mechanisms 120 lie forwards of the vertical plane "V" so that the seat 110 can be transformed from its 'in-use' position to its stowed position by motion about its front floor fixings 141, 151 and the front floor fixings 141, 151 never lie in the cargo area of the vehicle. When the seat 110 is in its stowed position, no part of the pair of support mechanisms 120 including the front floor fixings 141, 151 lies to the rear of the vertical plane "V" positioned adjacent to a rear face of the stowed backrest 111.

When the bulkhead 9 is in its forward position, a front face of the moveable bulkhead 9 is aligned with the vertical plane "V" and so it may be desirable for the vertical plane "V" to be slightly to the rear of the rear face of the backrest 111 so that rattling of the backrest 111 against the bulkhead 9 is avoided.

Operation of the seat 110 is as follows.

From the 'in-use' position as shown in Figs.8 and 9 the first step is to release the latches holding the seat 110 in the 'in-use' position, this is affected by operating a handle or lever (not shown) attached to an upper portion of the backrest 111 which is connected to the latches by a linkage such as cable (not shown). After the latches have been released the backrest 111 is merely pulled forward using the handle to the stowed position. Because the support mechanisms 120 interlink the backrest 111 and the seat squab 112 no separate operation of the seat squab 112 is required. After the seat 110 has been stowed the bulkhead 9 can be moved to its forward position.

To return the seat 110 from the stowed position to the 'in-use' position, the bulkhead 9 is first moved to its rear position and then the backrest 111 is merely pushed or pulled rearwardly until the latches are re-engaged.

One significant advantage of the invention is that movement of the seat 110 between the in-use and stowed positions is affected by simply moving the backrest 111 forward or rearward between its 'in-use' and stowed positions.

It will be appreciated that the seat 110 can be designed to have the capacity to accommodate a single passenger or could be designed to have the capacity to accommodate more than one passenger.

It will also be appreciated that the motor vehicle may have two or more seats 110 arranged as a second row of seats.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the appended claims.

## Claims

1. A motor vehicle seat (10, 110) for a motor vehicle (1) having a moveable bulkhead (9), the seat (10, 110) comprising a seat back (11, 111) and a seat squab (12, 112) having front and rear ends (12f, 12r) and a pair of support mechanisms (20, 120) connecting the seat back (11, 111) and the seat squab (12, 112) to a floor (3) of the motor vehicle (1), the seat (10, 110) being moveable from an 'in-use' position in which the seat squab (12,112) is arranged substantially horizontally and the backrest (11, 111) extends upwardly from the rear end (12r) of the seat squab (12, 112) to a stowed position in which the seat squab (12, 112) and the backrest (11, 111) are arranged substantially vertically one upon the other with the backrest (11, 111) extending substantially vertically upwards from the rear end (12r) of the stowed squab (12), the pair of support mechanisms (20, 120) interlinking the backrest (11, 111) and the seat squab (12,112) such that movement between the in-use and stowed positions of the seat (10, 110) is affected by simply moving the backrest (11, 111) forward or rearward between its 'in-use' and stowed positions, **characterised in that**, each of the support mechanisms (20) comprises first, second, third and fourth arms (30, 130; 40, 140; 50 150; and 60, 160) which are interlinked so as to interconnect the backrest (11) and the seat squab (12), connect the seat (10) to the floor (3) of the motor vehicle (1) and control the movement of the seat (10) during transit between the in-use and stowed positions, when the seat (10, 110) is in its stowed position, no part of the pair of support mechanisms (20, 120) lies to the rear of a vertical plane (V) positioned adjacent to a rear face of the stowed backrest (11, 111) and, when the bulkhead (9) is in a forward position, a front face of the moveable bulkhead (9) is aligned with the vertical plane (V).

2. A motor vehicle seat (10, 110) as claimed in claim 1 wherein front floor fixings (41, 51) of the pair of support mechanisms (20, 120) are formed as pivot mechanisms fastened to the floor (3) of the vehicle (1) and the front floor fixings (41, 51) of the pair of support mechanisms (20, 120) lie forwards of the vertical plane (V) so that the seat (10, 110) can be transformed from its 'in-use' position to its stowed position by motion about its front floor fixings (41, 51).

3. A motor vehicle seat (10, 110) as claimed in claim 1 or in claim 2 wherein there is one support mechanism (20, 120) located on each side of the seat (10, 110), each of which comprises the first arm (30, 130) fixed at one end to the backrest (11, 111), releasably attached at an opposite end to the floor (3) of the motor vehicle (1) by a latch (32) and pivotally connected to the seat squab (12, 112) so as to support the rear end (12r) of the seat squab (12), the second arm (40, 140) pivotally connected at one end to the backrest (11, 111) and pivotally connected at an opposite end to the floor (3) of the motor vehicle (1), the third arm (50, 150) pivotally connected at one end to the backrest (11, 111) and pivotally connected at an opposite end to the floor (3) of the motor vehicle (1) and the fourth arm (60, 160) pivotally connected at one end to the seat squab (12, 112) and pivotally connected at an opposite end to the third arm (50, 150) so as to support the front end (12f) of the seat squab (12), the second and third arms (40, 140, 50, 150) forming in combination with the backrest (11, 111) and the floor (3) of the motor vehicle (1) a four bar linkage.

4. A motor vehicle seat (10, 110) as claimed in claim 3 wherein the seat squab (12, 112), the fourth arm (60, 160), the portion of the third arm (50, 150) in between the pivotal connection (62, 162) to the fourth arm (60, 160) and the pivotal connection (52, 152) to the first arm (30, 130) and the portion of the first arm (30, 130) in between the pivotal connection (52, 152) of the third arm (50, 150) to the first arm (30, 130) and the pivotal connection (31, 142) to the rear end (12r) of the seat squab (12, 112) form a second four bar linkage which controls the movement of the seat squab (12, 112) in relation to the backrest (11, 111) during the transformation of the seat (10, 110).

5. A motor vehicle seat (10, 110) as claimed in claim 3 or in claim 4 wherein the first arm (30, 130) is used to pivotally connect the second and third arms (40, 140, 50, 150) to the backrest (11, 111).

6. A motor vehicle seat (110) as claimed in any of claims 3 to 5 wherein the first arm (130) is pivotally connected to the seat squab (112) so as to support the rear end of the seat squab (112) by a pivot joint (142) and the second arm (140) is pivotally connected to the first arm by the same pivot joint (142).

7. A motor vehicle seat (10) as claimed in claim 3 or in claim 4 wherein the second and third arms (40, 50) are pivotally connected to a support frame (15) of the backrest (11) and the first arm (30) is fixed to the support frame (15) .

8. A motor vehicle (1) having a moveable bulkhead (9) to vary the load carrying capacity of the motor vehicle (1) wherein the motor vehicle (1) includes at least one motor vehicle seat (10, 110) as claimed in any of claims 1 to 7.

9. A motor vehicle (1) as claimed in claim 8 wherein the motor vehicle (1) has two or more motor vehicle seats (10, 110) as claimed in claim 8 arranged as a second row of seats.

10. A motor vehicle (1) as claimed in claim 9 wherein the second row of seats comprises of one seat having a capacity to support one passenger and one seat having a capacity to support two passengers.

## Patentansprüche

1. Kraftfahrzeugsitz (10, 110) für ein Kraftfahrzeug (1) mit einer bewegbaren Trennwand (9), wobei der Sitz (10, 100) eine Sitzlehne (11, 111) und ein Sitzpolster (12, 112) mit einem vorderen Ende (12f) und einem hinteren Enden (12r) sowie ein Paar Stützmechanismen (20, 120) umfasst, die die Sitzlehne (11, 111) und das Sitzpolster (12, 112) mit einem Boden (3) des Kraftfahrzeugs (1) verbinden, wobei der Sitz (10, 110) von einer Gebrauchsposition, in der das Sitzpolster (12, 112) im Wesentlichen horizontal angeordnet ist und sich die Rückenlehne (11, 111) vom hinteren Ende (12r) des Sitzpolsters (12, 112) nach oben erstreckt, in eine verstaute Position, in der das Sitzpolster (12, 112) und die Rückenlehne (11, 111) im Wesentlichen vertikal übereinander angeordnet sind, wobei sich die Rückenlehne (11, 111) vom hinteren Ende (12r) des verstauten Polsters (12) im Wesentlichen vertikal nach oben erstreckt, bewegbar ist, wobei das Paar Stützmechanismen (20, 120) die Rückenlehne (11, 111) und das Sitzpolster (12, 112) so miteinander verbindet, dass eine Bewegung zwischen der Gebrauchsposition und der verstauten Position des Sitzes (10, 110) einfach durch Bewegen der Rückenlehne (11, 111) vorwärts oder rückwärts zwischen ihrer Gebrauchsposition und ihrer verstauten Position erwirkt wird, **dadurch gekennzeichnet, dass** jeder der Stützmechanismen (20) einen ersten Arm (30, 130), einen zweiten Arm (40, 140), einen dritten Arm (50, 150) und einen vierten Arm (60, 160) umfasst, die so miteinander verbunden sind, dass sie die Rückenlehne (11) und das Sitzpolster (12) miteinander verbinden, den Sitz (10) mit dem Boden (3) des Kraftfahrzeugs (1) verbinden und die Bewegung des Sitzes (10) während des Übergangs zwischen der Gebrauchsposition und der verstauten Position steuern, wenn sich der Sitz (10, 110) in seiner verstauten Position befindet, kein Teil des Paares von Stützmechanismen (20, 120) hinter einer vertikalen Ebene (V) liegt, die angrenzend an eine hintere Oberfläche der verstauten Rückenlehne (11, 111) positioniert ist, und wenn sich die Trennwand (9) in einer Vorwärtsposition befindet, eine vordere Oberfläche der beweglichen Trennwand (9) auf die vertikale Ebene (V) ausgerichtet ist.

2. Kraftfahrzeugsitz (10, 110) nach Anspruch 1, wobei vordere Bodenfixierungen (41, 51) des Paares von Stützmechanismen (20, 120) als am Boden (3) des Fahrzeugs (1) befestigte Schwenkmechanismen ausgebildet sind und die vorderen Bodenfixierungen (41, 51) des Paares von Stützmechanismen (20, 120) vor der vertikalen Ebene (V) liegen, sodass der Sitz (10, 110) durch Bewegung über seine vorderen Bodenfixierungen (41, 51) von seiner Gebrauchsposition in seine verstaute Position transformiert werden kann.

3. Kraftfahrzeugsitz (10, 110) nach Anspruch 1 oder 2, wobei es auf jeder Seite des Sitzes (10, 110) einen Stützmechanismus (20, 120) gibt, die jeweils den ersten Arm (30, 130), mit einem Ende fixiert an der Rückenlehne (11, 111), lösbar angebracht an einem gegenüberliegenden Ende des Bodens (3) des Kraftfahrzeugs (1) durch eine Verriegelung (32) und schwenkbar verbunden mit dem Sitzpolster (12, 112), sodass er das hintere Ende (12r) des Sitzpolsters (12) stützt, den zweiten Arm (40, 140), an einem Ende schwenkbar verbunden mit der Rückenlehne (11, 111), und an einem gegenüberliegenden Ende schwenkbar verbunden mit dem Boden (3) des Kraftfahrzeugs (1), den dritten Arm (50, 150), an einem Ende schwenkbar verbunden mit der Rückenlehne (11, 111), und an einem gegenüberliegenden Ende schwenkbar verbunden mit dem Boden (3) des Kraftfahrzeugs (1), und den vierten Arm (60, 160), an einem Ende schwenkbar verbunden mit dem Sitzpolster (12, 112), und an einem gegenüberliegenden Ende schwenkbar verbunden mit dem dritten Arm (50, 150), umfassen, um das vordere Ende (12f) des Sitzpolsters (12) zu stützen, wobei der zweite Arm (40, 140) und der dritte Arm (50, 150) in Kombination mit der Rückenlehne (11, 111) und dem Boden (3) des Kraftfahrzeugs (1) eine vier Stangen umfassende Verbindung bilden.

4. Kraftfahrzeugsitz (10, 110) nach Anspruch 3, wobei das Sitzpolster (12, 112), der vierte Arm (60, 160), der Abschnitt des dritten Arms (50, 150) zwischen der schwenkbaren Verbindung (62, 162) mit dem vierten Arm (60, 160) und der schwenkbaren Verbindung (52, 152) mit dem ersten Arm (30, 130) und der Abschnitt des ersten Arms (30, 130) zwischen der schwenkbaren Verbindung (52, 152) des dritten Arms (50, 150) mit dem ersten Arm (30, 130) und der schwenkbaren Verbindung (31, 142) mit dem hinteren Ende (12r) des Sitzpolsters (12, 112) eine zweite vier Stangen umfassende Verbindung bilden, die die Bewegung des Sitzpolsters (12, 112) in Beziehung zur Rückenlehne (11, 111) während der Transformation des Sitzes (10, 110) steuert.

5. Kraftfahrzeugsitz (10, 110) nach Anspruch 3 oder Anspruch 4, wobei der erste Arm (30, 130) verwendet wird, um den zweiten Arm (40, 140) und den dritten Arm (50, 150) schwenkbar mit der Rückenlehne (11, 111) zu verbinden.

6. Kraftfahrzeugsitz (110) nach einem der Ansprüche 3 bis 5, wobei der erste Arm (130) schwenkbar mit dem Sitzpolster (112) verbunden ist, sodass das hintere Ende des Sitzpolsters (112) durch ein Schwenkgelenk (142) gestützt wird und der zweite Arm (140) durch dasselbe Schwenkgelenk (142) schwenkbar mit dem ersten Arm verbunden ist.

7. Kraftfahrzeugsitz (10) nach Anspruch 3 oder Anspruch 4, wobei der zweite Arm (40) und der dritte Arm (50) schwenkbar mit einem Stützrahmen (15) der Rückenlehne (11) verbunden sind und der erste Arm (30) an dem Stützrahmen (15) fixiert ist.

8. Kraftfahrzeug (1) mit einer beweglichen Trennwand (9), um die Tragfähigkeit des Kraftfahrzeugs (1) zu variieren, wobei das Kraftfahrzeug (1) mindestens einen Kraftfahrzeugsitz (10, 110) nach einem der Ansprüche 1 bis 7 beinhaltet.

9. Kraftfahrzeug (1) nach Anspruch 8, wobei das Kraftfahrzeug (1) über zwei oder mehr Kraftfahrzeugsitze (10, 110) nach Anspruch 8 verfügt, die als eine zweite Reihe von Sitzen angeordnet sind.

10. Kraftfahrzeug (1) nach Anspruch 9, wobei die zweite Reihe von Sitzen einen Sitz umfasst, der eine Kapazität zum Stützen von einem Insassen hat, und einen Sitz, der eine Kapazität zum Stützen von zwei Insassen hat.

## Revendications

1. Siège de véhicule à moteur (10, 110) pour un véhicule à moteur (1) présentant une cloison mobile (9), le siège (10, 110) comprenant un dossier (11, 111) et un coussin de siège (12, 112) présentant des extrémités avant et arrière (12f, 12r) et une paire de mécanismes de support (20, 120) qui connectent le dossier (11, 111) et le coussin de siège (12, 112) à un plancher (3) du véhicule à moteur (1), le siège (10, 110) étant déplaçable à partir d'une position 'd'utilisation', dans laquelle le coussin de siège (12,112) est agencé sensiblement horizontalement et le dossier (11, 111) s'étend vers le haut à partir de l'extrémité arrière (12r) du coussin de siège (12, 112), jusqu'à une position repliée dans laquelle le coussin de siège (12, 112) et le dossier (11, 111) sont agencés sensiblement verticalement l'un au-dessus de l'autre avec le dossier (11, 111) qui s'étend sensiblement verticalement vers le haut à partir de l'extrémité arrière (12r) du coussin replié (12), la paire de mécanismes de support (20, 120) reliant mutuellement le dossier (11, 111) et le coussin de siège (12,112) de telle sorte qu'un déplacement entre les positions d'utilisation et repliée du siège (10, 110) soit effectué en déplaçant simplement le dossier (11, 111) vers l'avant ou vers l'arrière entre ses positions 'd'utilisation' et repliée, **caractérisé en ce que** chacun des mécanismes de support (20) comprend des premier, deuxième, troisième et quatrième bras (30, 130; 40, 140; 50, 150; et 60, 160) qui sont reliés mutuellement de manière à interconnecter le dossier (11) et le coussin de siège (12), à connecter le siège (10) au plancher (3) du véhicule à moteur (1) et à commander le déplacement du siège (10) pendant la transition entre les positions d'utilisation et repliée, lorsque le siège (10, 110) se trouve dans sa position repliée, aucune partie de la paire de mécanismes de support (20, 120) ne se trouve à l'arrière d'un plan vertical (V) positionné à proximité d'une face arrière du dossier replié (11, 111) et, lorsque la cloison (9) se trouve dans une position vers l'avant, une face avant de la cloison mobile (9) est alignée avec le plan vertical (V).

2. Siège de véhicule à moteur (10, 110) selon la revendication 1, dans lequel des fixations de plancher avant (41, 51) de la paire de mécanismes de support (20, 120) sont formées comme des mécanismes de pivot attachés au plancher (3) du véhicule (1) et les fixations de plancher avant (41, 51) de la paire de mécanismes de support (20, 120) sont situées en avant du plan vertical (V) de telle sorte que le siège (10, 110) puisse être transformé depuis sa position 'd'utilisation' dans sa position repliée par un mouvement autour de ses fixations de plancher avant (41, 51).

3. Siège de véhicule à moteur (10, 110) selon la revendication 1 ou la revendication 2, dans lequel un mécanisme de support (20, 120) est situé de chaque côté du siège (10, 110), donc chacun comprend un premier bras (30, 130) fixé à une première extrémité au dossier (11, 111), attaché de façon détachable à une extrémité opposée au plancher (3) du véhicule à moteur (1) par un verrou (32) et connecté de façon pivotante au coussin de siège (12, 112) de manière à supporter l'extrémité arrière (12r) du coussin de siège (12), un deuxième bras (40, 140) connecté de façon pivotante à une première extrémité au dossier (11, 111) et connecté de façon pivotante à une extrémité opposée au plancher (3) du véhicule à moteur (1), un troisième bras (50, 150) connecté de façon pivotante à une première extrémité au dossier (11, 111) et connecté de façon pivotante à une extrémité opposée au plancher (3) du véhicule à moteur (1), et un quatrième bras (60, 160) connecté de façon pivotante à une première extrémité au coussin de siège (12, 112) et connecté de façon pivotante à une extrémité opposée au troisième bras (50, 150) de manière à supporter l'extrémité avant (12f) du coussin de siège (12), les deuxième et troisième bras (40, 140, 50, 150) formant en combinaison avec le dossier (11, 111) et le plancher (3) du véhicule à moteur (1) une tringlerie à quatre barres de liaison.

4. Siège de véhicule à moteur (10, 110) selon la revendication 3, dans lequel le coussin de siège (12, 112), le quatrième bras (60, 160), la partie du troisième bras (50, 150) entre la connexion pivotante (62, 162) au quatrième bras (60, 160) et la connexion pivotante (52, 152) au premier bras (30, 130) et la partie du premier bras (30, 130) entre la connexion pivotante (52, 152) du troisième bras (50, 150) au premier bras (30, 130) et la connexion pivotante (31, 142) à l'extrémité arrière (12r) du coussin de siège (12, 112) forment une deuxième tringlerie à quatre barres de liaison qui commande le déplacement du coussin de siège (12, 112) par rapport au dossier (11, 111) pendant la transformation du siège (10, 110).

5. Siège de véhicule à moteur (10, 110) selon la revendication 3 ou la revendication 4, dans lequel le premier bras (30, 130) est utilisé pour connecter de façon pivotante les deuxième et troisième bras (40, 140, 50, 150) au dossier (11, 111).

6. Siège de véhicule à moteur (110) selon l'une quelconque des revendications 3 à 5, dans lequel le premier bras (130) est connecté de façon pivotante au coussin de siège (112) de manière à supporter l'extrémité arrière du coussin de siège (112) par une articulation à pivot (142), et le deuxième bras (140) est connecté de façon pivotante au premier bras par la même articulation à pivot (142).

7. Siège de véhicule à moteur (10) selon la revendication 3 ou la revendication 4, dans lequel les deuxième et troisième bras (40, 50) sont connectés de façon pivotante à un cadre de support (15) du dossier (11), et le premier bras (30) est fixé au cadre de support (15).

8. Véhicule à moteur (1) présentant une cloison mobile (9) pour faire varier la capacité de support de charge du véhicule à moteur (1) dans lequel le véhicule à moteur (1) comprend au moins un siège de véhicule à moteur (10, 110) selon l'une quelconque des revendications 1 à 7.

9. Véhicule à moteur (1) selon la revendication 8, dans lequel le véhicule à moteur (1) est pourvu de deux ou plus de deux sièges de véhicule à moteur (10, 110) selon la revendication 8 agencés sous la forme d'une deuxième rangée de sièges.

10. Véhicule à moteur (1) selon la revendication 9, dans lequel la deuxième rangée de sièges comprend un siège offrant la capacité d'accueillir un passager et un siège offrant la capacité d'accueillir deux passagers.
